Europäisches Patentamt

European Patent Office

Office européen des brevets

(11) Veröffentlichungsnummer: **0 127 699**
**A1**

# (12) EUROPÄISCHE PATENTANMELDUNG

(21) Anmeldenummer: 83112874.9

(22) Anmeldetag: 21.12.83

(51) Int. Cl.³: **G 01 C 17/30**

(30) Priorität: 11.04.83 DE 3312880

(43) Veröffentlichungstag der Anmeldung:
12.12.84 Patentblatt 84/50

(84) Benannte Vertragsstaaten:
DE FR GB IT SE

(71) Anmelder: VDO Adolf Schindling AG
Gräfstrasse 103
D-6000 Frankfurt/Main(DE)

(72) Erfinder: Hahlganss, Günter
Breslauer Strasse 29
D-6239 Kriftel(DE)

(72) Erfinder: Angermüller, Helmut
Raimundstrasse 100
D-6000 Frankfurt/Main 1(DE)

(74) Vertreter: Könekamp, Herbert, Dipl.-Ing.
Sodener Strasse 9
D-6231 Schwalbach(DE)

(54) Magnetischer Erdfelddetektor, insbesondere für Koppelnavigationseinrichtungen von Fahrzeugen.

(57) Ein magnetischer Erdfelddetektor, insbesondere für eine Koppelnavigationseinrichtung von Fahrzeugen, umfaßt einen Ringkern hoher Permeabilität, der mit mindestens einer Erregerwicklung und für je eine zu erfassende Richtungskomponente des Erdfelds mit mindestens einer Signalspule (3, 4) bewickelt ist. In der Signalspule wird bei Wechselfelderregung des Ringkerns eine von der Erdfeldkomponente abhängige Signalwechselspannung mit der doppelten Frequenz der Wechselfelderregung induziert. Ein phasenempfindlicher Gleichrichten (6, 6a) richtet diese Signalwechselspannung gleich und führt sie einem summierenden Verstärker (11) zu, der eine der Erdfeldkomponente annähernd proportionale Signalgleichspannung abgibt. Um die Linearität zwischen Erdfeldkomponente und Signalgleichspannung bei hoher Meßempfindlichkeit zu verbessern, ist der summierende Verstärker als Integrator ausgebildet, dessen Ausgang über Mittel (15, 15a) zur Erzeugung eines eingeprägten Stromes und eine Gegenkopplungsleitung (14) mit der Signalspule in Verbindung steht.

EP 0 127 699 A1

./...

FIG. 2

0127699

VDO Adolf Schindling AG     - 1 -     6000 Frankfurt/Main
Gräfstraße 103
G-R Sch-do
1700
15. März 1983

Magnetischer Erdfelddetektor, insbesondere für
Koppelnavigationseinrichtung von Fahrzeugen

Die Erfindung betrifft einen magnetischen Erdfelddetektor,
insbesondere für eine Koppelnavigationseinrichtung von Fahrzeugen nach dem Oberbegriff des Anspruchs 1.

Derartige Erdfelddektoren sind dazu vorgesehen, um Gleichspannungssignale zu bilden, die ein Maß für die Lage des
Erdfelddetektors zu magnetisch Nord darstellen. Durch Verknüpfung zweier solcher Signale, von denen jedes eine horizontale Richtungskomponente zu magnetisch Nord beinhaltet,
kann der Kurswinkel eines Fahrzeugs als elektrische Größe
dargestellt werden. Derartige Einrichtungen sind insbesondere
in Wasser- und Landfahrzeugen für eine Koppelnavigationseinrichtung vorgesehen, die selbsttätig aus der zurückliegenden
Wegstrecke des Fahrzeugs und dem jeweiligen Kurswinkel den
Standort des Fahrzeugs errechnet.

Im einzelnen ist in einem bekannten magnetischen Erdfelddetektor ein Ferrit-Ringkern vorgesehen, der mit zwei
Erregerwicklungen und zwei Rückkopplungswicklungen bewickelt
ist. Der gesamte Kern wird weiterhin von zwei rechtwinklig zueinander angeordneten Signalspulen eingeschlossen. Die Erregerspulen des Ringkerns werden durch einen magnetischen Multivibrator, der mit ungefähr 10 khz schwingt, so beaufschlagt, daß der Ringkern in beiden Magnetisierungsrichtungen mit der Frequenz der Schwingung in Sättigung getrieben wird. Die Rückkopplungswicklungen sind dazu vorgesehen, den magnetischen Oszillator zu steuern, um dessen Schwingung aufrecht zu erhalten. Die beiden Signalspulen oder Sekundärspulen sind so angeordnet, daß in ihnen bei Abwesenheit eines äußeren Magnetfeldes wenigstens theoretisch keine Spannung induziert wird, da sich die zeitlichen Flußänderungen in zwei um 180° versetzten Stellen des Ringkerns hinsichtlich ihrer Induktionswirkung in der Signalspule aufheben. In der Praxis treten wegen Unvollkommenheiten des Ringkerns und der Spulen in den Signalspulen Spannungsspitzen beim Ummagnetisieren auf. - Wenn ein äußeres Feld, das Erdfeld, auf den Ringkern einwirkt, wird dieser mit einem magnetischen Gleichfeld vormagnetisiert. Dies hat zur Folge, daß durch die Wechselfelderregung die Sättigung in dem Bereich des Ringkerns früher erreicht wird, wo sich die Wechselfelderregung mit der Gleichfelderregung addiert. An der um 180° gegenüberliegenden Stelle des Ringkerns tritt die Sättigung wegen der Subtraktion des Gleichfeldes und des Wechselfeldes entsprechend später ein. Diese Situation trifft für eine Halbwelle der Wechselfelderregung zu und kehrt sich bei der nächsten Halbwelle jeweils um. Durch die unsymmetrische Sättigung des Ringkerns wird also ein Flußungleichgewicht in dem Kern erzielt und eine entsprechende Spannung in den Signalspulen induziert. Dabei ist wenigstens theoretisch die Größe der induzierten Signalwechselspannung proportional der Flußkomponente des Gleichfeldes, die senkrecht zu der Ebene der betreffenden Signalspule steht. Diese Flußkomponente entspricht bei geeigneter Ausrichtung des Ringkerns einer horizontalen Richtungskomponente des Erdfelds. - Um eine auswertbare Signalgleichspannung aus der Signalwechselspannung zu erhalten, wird die Signalwechselspannung mit einem phasenempfindlichen Gleichrichter gleichgerichtet. Dieser Gleichrichter ist vorzugsweise ein gesteuerter Gleichrichter, der mit der doppelten Frequenz der Wechselfelderregung umgeschaltet wird. Die Ausgangsgrößen des Gleichrichters werden in einem summierenden Verstärker zu Gleichspannungsmittelwerten als Signalgleichspannung zusammengesetzt. Diese Signalgleichspannung soll möglichst proportional einer Winkelfunktion zwischen dem Erdfeld und der Signalspulenebene sein, um hieraus in Verbindung mit einer weiteren Signalgleichspannung den exakten Kurswinkel zu bilden (Wireless World, Oktober 1982, Seite 49 ff).

Es hat sich aber gezeigt, daß die von solchen Erdfelddetektor erzeugten Signalwechselspannungen und Signalgleichspannungen nicht ganz unabhängig von den Eigenschaften des Ringkerns sind, insbesondere dessen örtlicher Permeabilitätsverteilung. Grundsätzlich arbeitet ein solcher Erdfelddetektor auch nur dann linear, wenn das zu erfassende magnetische Gleichfeld in dem Magnetkern nur eine kleine magnetische Induktion relativ zur Sättigungsinduktion dieses Ringkerns hervorruft. Damit wird aber die Empfindlichkeit des Erdfelddetektors begrenzt.

Zur möglichst exakten Messung des magnetischen Erdfelds insbesondere für wissenschaftliche Zwecke ist es beispielsweise bekannt, ein Helmholtz-Spulensystem zu verwenden, welches in seinem Inneren ein praktisch homogenes magnetisches Feld erzeugt. In diesem magnetischen Feld ist der Ringkern angeordnet. Die von der magnetischen Induktion des Ringkernes abgeleitete Signalgleichspannung wird dazu verwendet, die Helmholtz-Spulenanordnung so zu erregen, daß das von dem Helmholtz-Spulensystem erzeugte homogene Feld das Erdfeld praktisch aufhebt. Die von dem Erdfelddetektor erzeugte Signalgleichspannung ist dann ein Maß für das Erdfeld.
(J. Phys. E: Sci. Instrum., Vol. 15, 1982 Seiten 221 ff).

Ein großer Nachteil der voranstehenden Helmholtz-Spulenanordnung besteht aber darin, daß die sphärischen Spulen sich mit der gewünschten Exaktheit nur aufwendig herstellen lassen. Ferner ist der Raumbedarf der Spulenanordnung beachtlich.

Zu der vorliegenden Erfindung gehört daher die Aufgabe, einen magnetischen Erdfelddetektor der eingangs genannten Gattung so weiterzubilden, daß mit möglichst geringfügiger Erhöhung des Aufwandes die Linearität zwischen der erfaßten Richtungskomponente des Erdfelds und der hieraus abgeleiteten nutzbaren Signalspannung wesentlich verbessert wird, und zwar bei gleichzeitiger Erhöhung der Empfindlichkeit. Damit soll zugleich eine Voraussetzung dafür geschaffen werden, die Empfindlichkeit des Erdfelddetektors zu erhöhen.

Diese Aufgabe wird durch die in dem kennzeichnenden Teil des Anspruchs 1 angegebene Erfindung gelöst.

Erfindungsgemäß wird durch wenig aufwendige geschickte schaltungstechnische Maßnahmen die Wirkung des zu messenden Erdfeldes auf den Ringkern selbsttätig kompensiert, so daß dieser magnetisch stets in demselben Arbeitspunkt arbeitet, als ob kein externes magnetisches Gleichfeld vorhanden wäre. Zur Kompensation wird keine zusätzliche aufwendige Spulenanordnung benötigt, noch nicht einmal eine zusätzliche Kompensationsspule auf dem Ringkern selbst. Statt dessen wird die Signalspule, von der die Signalwechselspannung abgegriffen wird, gleichzeitig als Kompensationsspule benutzt. Die von dem Integrator erzeugte Signalgleichspannung, die den Kompensationsstrom durch die Signalspule treibt, ist direkt ein Maß für die von dieser Signalspule erfaßte Richtungskomponente des Erdfelds.

Vorzugsweise wird der Kompensationsstrom aus der von dem Integrator erzeugten Signalgleichspannung als eingeprägter Strom abgeleitet, indem der Signalspule ein hochohmiger, vorzugsweise temperaturunabhängiger Widerstand vorgeschaltet ist. Es besteht dann ein linearer Zusammenhang zwischen dem Kompensationsstrom und der Signalgleichspannung unabhängig von Temperatureinflüssen auf die Signalspule.

Eine galvanische Trennung zwischen dem Meßkreis, in dem die Signalspule liegt, und dem Kompensationskreis, der ebenfalls über die Signalspule führt, wird besonders wenig aufwendig durch einen die Signalspule von dem phasenempfindlichen Gleichrichter trennenden galvanischen Kondensator erreicht. Damit wird vermieden, daß der Kompensationsgleichstrom über den phasenempfindlichen Gleichrichter den Integrator beeinflußt.

Durch die Dimensionierung des Integrators, der zweckmäßig als über einen Kondensator rückgekoppelter Operationsverstärker ausgebildet ist, wird der Kompensationskreis dynamisch stabil. Unerwünschte Wechselfeldeinflüsse werden herausintegriert. Erforderlichenfalls kann ein weiterer Integrator oder ein anderes Glättungsmittel dem den Kompensationsstrom bildenden Integrator nachgeschaltet sein.

Die Erfindung wird im folgenden anhand einer Zeichnung mit 2 Figuren erläutert. Es zeigen:

Fig. 1     eine vereinfachte Darstellung des bewickelten Ringkerns und

Fig. 2     ein vereinfachtes Schaltbild der elektrischen Schaltungsanordnung des Erdfelddetektors.

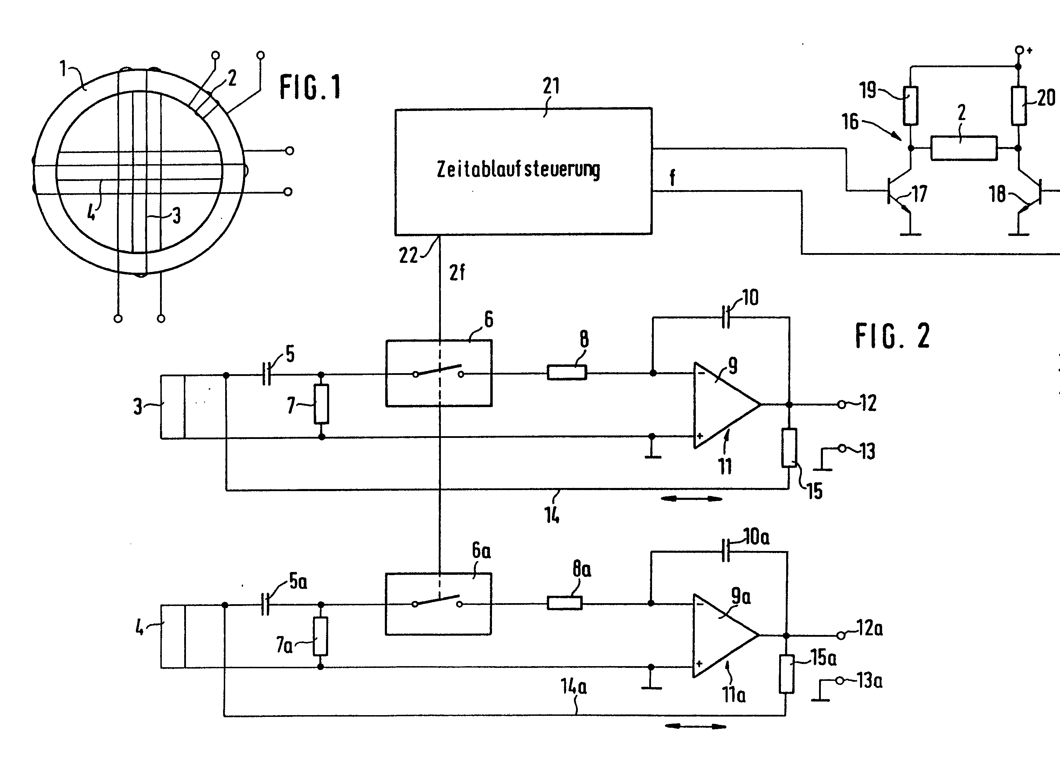

In Fig. 1 ist ein Ringkern aus hochpermeablem dünnen magnetischem Material mit 1 bezeichnet. Auf den Ringkern ist eine Erregerspule 2 aufgewickelt. Zwei rechtwinklig zueinander angeordnete Signalspulen 3 und 4 umfassen den Ringkern in seiner Gesamtheit, d.h. jeweils zwei um 180° gegeneinander versetzte Bereiche des Ringkerns. Die Signalspule 3 ist zur Erfassung einer magnetischen Richtungskomponente des Erdfelds in einer horizontalen Ebene und in X-Richtung vorgesehen, während die Signalspule 4 zur Erfassung der hierzu senkrechten horizontalen Richtungskomponente des magnetischen Erdfelds Y zuständig ist.

Der Aufbau des Ringkerns und seine Bewicklung sind also konventionell, insbesondere sind keine aufwendigen Kompensationswicklungen außerhalb des Ringkerns vorgesehen.

Die Erregerspule 2 und die Signalspulen 3 und 4 sind noch einmal in Fig. 2 schematisiert dargestellt.

In Fig. 2 sind die zu den Signalspulen 3 und 4 gehörenden Schaltkreise identisch. Es genügt daher, die Schaltkreise zu der Signalspule 3 zu besprechen:

Die Signalspule 3 ist über einen galvanisch trennenden Kondensator 5 an einen Eingang eines phasenempfindlichen, gesteuerten Gleichrichters 6 angeschlossen. Ein den Eingang des Gleichrichters überbrückender Widerstand ist mit 7 bezeichnet.

Der Ausgang des Gleichrichters 6 steht über einen Koppelwiderstand 8 mit einem Eingang eines Operationsverstärkers 9 in Verbindung. Der Ausgang des Operationsverstärkers ist über einen Kondensator 10 zu seinem Eingang rückgekoppelt, so daß der Operationsverstärker integrierend wirkt. Von dem

0127699

Ausgang des insgesamt mit 11 bezeichneten Integrators wird die Signalgleichspannung abgenommen: Klemmen 12 und 13.

Von dem Ausgang des Integrators 11 führt eine Gegenkopplungsleitung 14 über einen Vorwiderstand 15 direkt zu der Signalspule 3. Der Vorwiderstand 15 ist hochohmig gegenüber dem ohmschen Widerstand der Signalspule 3.

Eine analoge Schaltungsanordnung wie an der Signalspule 3 ist zu der Signalspule 4 vorgesehen; hier sind die entsprechenden Bauteile mit gleichen Bezugsziffern und zusätzlich a gekennzeichnet. - Die Erregerspule 2 ist durch einen elektronischen Umschalter 16 umschaltbar, so daß er periodisch von einem Erregerstrom wechselnder Richtung durchflossen wird. Zu dem elektronischen Umschalter gehören zwei wechselweise leitende Transistoren 17, 18 sowie Kollektorwiderstände 19, 20. Der Umschalter 16 wird durch eine Zeitablaufsteuerung 21 mit einem Taktgeber mit der Frequenz f gesteuert. An einem weiteren Ausgang 22 der Zeitablaufsteuerung tritt ein Steuersignal mit der doppelten Frequenz 2f auf, die zur Steuerung der phasenempfindlichen Gleichrichter 6 und 6a verwendet wird.

Die Erregerspule 2 wird also mit einem Erregerstrom der Frequenz f erregt, so daß in dem Ringkern eine magnetische Wechseldurchflutung dieser Frequenz auftritt. Der Wechseldurchflutung überlagert sich das magnetische Erdfeld, dessen Richtungskomponenten von den Signalspulen 3 und 4 erfaßt werden. Da das magnetische Gleichfeld bzw. Erdfeld das Wechselfeld überlagert, und zwar in jeweils einander entgegengesetzten Sinne in beiden Bereichen des Ringkerns, die von je einem der beiden Signalspulen 3 und 4 eingeschlossen werden, tendiert das Erdfeld dazu, den Richtungskomponenten entsprechende Signalwechselspannungen in den Signalspulen zu

0127699

induzieren, und zwar in üblicher Weise mit der Frequenz 2f. Diese Signalwechselspannung wird beispielsweise von der Signalspule 3 über den Kondensator 5 dem phasenempfindlichen Gleichrichter 6 zugeführt und dort phasenrichtig in eine nutzbare Gleichspannung umgewandelt. Durch die phasenempfindliche Gleichrichtung wird in üblicher Weise eine störende Wechselspannung der Frequenz f unterdrückt. Die nutzbare Spannung gelangt über den Koppelwiderstand 8 in den Integrator 11, der eine integrierte Signalgleichspannung abgibt. Aus dieser Signalgleichspannung wird über den Vorwiderstand 15 ein Kompensationsstrom abgeleitet, der der Signalspule 3 in dem Sinne zugeführt wird, daß er die Wirkung des äußeren Gleichfeldes bzw. Erdfeldes auf die Verschiebung des Arbeitspunktes des Ringkernes in den gegenüberliegenden Bereichen, die von der Signalspule umschlossen werden, aufhebt. Diese Kompensation hat zur Folge, daß sich Nichtlinearitäten nicht mehr auf den Zusammenhang zwischen Erdfeld und Signalgleichspannung auswirken.

Daher kann durch eine dünne Ausbildung des Ringkerns eine hohe Meßempfindlichkeit erreicht werden, indem das Verhältnis des steuernden Erdfelds zu der Sättigungsinduktion verbessert wird. Es treten praktisch keine Streuungen der Messungen durch Störgrößen, insbesondere Temperatureinflüsse ein. Nicht zuletzt kann der Ringkern fertigungsgünstig mit einem größeren Toleranzbereich seiner Daten hergestellt und bewickelt werden.

VDO Adolf Schindling AG     -1-     Gräfstraße 103 **0127699**
6000 Frankfurt/Main
G-R Sch-do
1700
15. März 1983

Patentansprüche:

1. Magnetischer Erdfelddetektor, insbesondere für eine Koppelnavigationseinrichtung von Fahrzeugen, mit einem Ringkern hoher Permeabilität, die mit mindestens einer Erregerwicklung und für je eine zu erfassende Richtungskomponente des Erdfelds mit mindestens einer Signalspule bewickelt ist, in der bei Wechselfelderregung des Ringkerns eine von der Erdfeldkomponente abhängige Signalwechselspannung mit der doppelten Frequenz der Wechselfelderregung induziert wird, mit einem mit der Signalwechselspannung beaufschlagten phasenempfindlichen Gleichrichter und einem nachgeschalteten summierenden Verstärker, der eine der Erdfeldkomponente annähernd proportionale Signalgleichspannung abgibt,

d a d u r c h   g e k e n n z e i c h n e t ,
daß zur Kompensation von die Linearität zwischen Erdfeldkomponente und Signalgleichspannung störenden Einflüssen der summierende Verstärker als Integrator (11, 11a) ausgebildet ist, dessen Ausgang über Mittel zur Erzeugung eines eingeprägten Stromes (15, 15a) und eine Gegenkopplungsleitung (14, 14a) mit der Signalspule (3, 4) in Verbindung steht.

2. Magnetischer Erdfelddetektor nach Anspruch 1,
d a d u r c h   g e k e n n z e i c h n e t ,
daß die Signalspule (3, 4) von dem phasenempfindlichen Gleichrichter (6, 6a) durch einen Kondensator (5, 5a) galvanisch getrennt ist.

3. Magnetischer Erdfelddetektor nach Anspruch 1 oder 2,
d a d u r c h   g e k e n n z e i c h n e t ,
daß als Integrator (11, 11a) ein über einen Kondensator (10, 10a) rückgekoppelter Operationsverstärker (9, 9a) vorgesehen ist.

4. Magnetischer Erdfelddetektor nach einem der Ansprüche 1-3, d a d u r c h   g e k e n n z e i c h n e t, daß als Mittel zur Erzeugung eines eingeprägten Stroms ein gegenüber der Signalspule (3, 4) hochohmiger Vorwiderstand (15, 15a) vorgesehen ist.

FIG.1

FIG. 2

Zeitablaufsteuerung

0127699

0127699

Europäisches
Patentamt

**EUROPÄISCHER RECHERCHENBERICHT**

Nummer der Anmeldung

EP  83 11 2874

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| X | DE-A-2 929 504  (MITSUBISHI)<br>* Seiten 24,25; Figur 12 *<br><br>-----  | 1-4 | G 01 C  17/30 |

**RECHERCHIERTE SACHGEBIETE (Int. Cl. ³)**

G 01 C

Der vorliegende Recherchenbericht wurde für alle Patentansprüche erstellt.

| Recherchenort<br>DEN HAAG | Abschlußdatum der Recherche<br>19-07-1984 | Prüfer<br>DE BUYZER H.J. |
|---|---|---|